# EUROPEAN PATENT APPLICATION

(11) **EP 4 624 368 A1**
(43) Date of publication of application: **01.10.2025**
(21) Application number: 24166160.2
(22) Date of filing: 26.03.2024
(51) Int. Cl.: B65G 1/04

(54) **AN AUTOMATED WAREHOUSE INTERVENTION SHUTTLE**

(71) Applicant: MOVU, 9160 Lokeren (BE)
(72) Inventor: PARZCAR, Hamid, 9820 Merelbeke (BE)
(74) Representative: IP HILLS NV

(57) **Abstract**

An intervention shuttle for human intervention in an automated warehouse, the warehouse including at least one storage lane along a first direction and at least one transit lane along a second direction transverse to the first direction, wherein the intervention shuttle is configured to be driven manually on a first track extending along the at least one storage lane and on a second track extending along the at least one transit lane, wherein the intervention shuttle includes a first set of at least four wheels configured to drive on the first track and a second set of at least four wheels configured to drive on the second track.

## Description

### Field of the Invention

The present invention generally relates to an automated warehouse intervention shuttle.

### Background of the Invention

Automated warehouses and automated warehouse shuttle systems are generally known. Warehouses include relatively large storage structures, generally structured along a plurality of substantially parallel lanes. The storage structures are arranged to provide storage locations to goods, often palletized goods. Said storage locations may be provided on a plurality of levels within the storage structure. In order to automate delivery and pick up of goods to and from said storage locations, automated warehouses can include an automated warehouse shuttle system. Said shuttle systems generally include a track system including at least one pair of rails arranged in a substantially horizontal plane along a lane of the warehouse, or more generally speaking, at least one pair of rails along each of the lanes of the warehouse, which are generally arranged substantially in parallel to each other, and more preferably, a pair of rails per level and per lane of the warehouse. Transverse aisles may connect said substantially parallel lanes, which transverse aisles may or may not be provided with tracks. Additionally, lift systems may allow connections between various levels of the storage structure. Storage lanes usually do not include a solid floor, whereas transverse aisles may be provided with a solid floor at predetermined levels. The system further includes warehouse shuttles, in particular mobile robots, which are configured to move along said tracks, and which are configured to transport goods and/or goods carriers, such as for example pallets, to and from said storage locations in the storage structure. An automated shuttle system can comprise a plurality of automated shuttles which are often integrated into, and controlled by, a central warehouse management control system.

When one of said shuttles needs servicing, the shuttle can generally be moved to a servicing area outside of an operational area of the shuttle system, but it may happen that a shuttle is broken and cannot be moved automatically out of the system. In other situations, goods or goods carriers, such as pallets, may be broken or may have fallen off their storage location and may hinder normal warehouse operations. A human intervention may then be necessary at the location of hindrance. Given the lack of solid floors on many or all levels, in particular in storage lanes, and given the potential heights of such storage structures in warehouses, it may be relatively difficult and dangerous for a human to reach the location of hindrance where a human intervention is needed. Moreover, material for reparation often needs to be taken along, which is relatively difficult in combination with safety measures for working at heights. Moreover, automated shuttles used to move goods in and out of the warehouse may not be used for human transport because of safety restrictions.

It is therefore an aim of the present invention to solve or at least partly alleviate the above-mentioned problems. In particular, the present invention aims at providing an intervention shuttle for human intervention in an automated warehouse which can allow relatively safe movement of a human within an automated warehouse.

### Summary of the Invention

To this aim, there is provided an intervention shuttle for human intervention in an automated warehouse according to the features of claim 1. In particular, the intervention shuttle for human intervention in an automated warehouse is configured to safely carry a human to a place of intervention in an automated warehouse. The intervention shuttle is configured to be driven manually, which is a safety measure for an intervention shuttle to carry a human in an automated warehouse and allows interventions in a section of a warehouse where the automated shuttle system is down. Such an automated warehouse includes at least one storage lane along a first direction and at least one transit lane along a second direction transverse to the first direction. In general, such a warehouse can include a plurality of storage lanes configured to store goods, which lanes are substantially in parallel to each other. The warehouse can further include a plurality of transit lanes which are also substantially in parallel to each other, and which are substantially transverse to said storage lanes. The storage lanes and the transit lanes may extend over a plurality of levels or storeys of the automated warehouse. At least one first track extends along the at least storage lane, and at least one second track extends along the at least one transit lane. In case the at least one storage lane and/or the at least one transit lane extend over a plurality of levels, the at least one storage lane can include a plurality of first tracks, each first track extending along the storage lane on a different level. Analogously, the at least one transit lane may include a plurality of second tracks, each second track extending along said transit lane on a different level. The intervention shuttle is configured to be driven manually on a first track extending along the at least one storage lane and on a second track extending along the at least one transit lane, said first track and said second track extending on a same level or storey of the automated warehouse. In other words, the intervention shuttle is configured to be driven along a first track which intersects substantially transversely a second track, said first track and said second track being on a same level of the automated warehouse. The first track extending along a storage lane may not only be configured to guide an automated warehouse shuttle and an intervention shuttle, but may also be configured to store goods, for example palletized goods. Thereto, the first track may for example include at least two rails, each rail including two substantially parallel surfaces, a first surface or lower surface configured to receive wheels of an automated warehouse shuttle and an intervention shuttle, also called a rolling or running face or a gauge face of the rail, and a second surface or an upper surface configured to support stored goods. The running face of the at least one rail of the first track and the running face of the at least one rail of the second track of the same storey need not be at exactly the same height but may include a slight difference in height. The intervention shuttle includes a first set of at least four wheels configured to engage and drive on the first track. The intervention shuttle further includes a second set of at least four wheels configured to engage and drive on the second track. In other words, a first set of wheels serves for driving the shuttle on a first track along the at least one storage lane, and a second set of wheels serves for driving the shuttle on a second track along the at least one transit lane. In an inventive way, the intervention shuttle includes at least one pair of extendable arms positioned substantially in parallel with a rotation axis of the first set of at least four wheels. The extendable arms of the at least one pair of extendable arms are preferably positioned on opposing sides of the intervention shuttle as seen in the first direction. In other words, at least one extendable arm is positioned on a front side and at least one on a back side when seen in the first direction. Said at least one pair of extendable arms are extendable longitudinally between a retracted position and an extended position. In other words, the extendable arms can be extended in line with the arm, as a prolongation of the arm, either on one end only or on both ends of the arm. A length of the at least one pair of extendable arms in the retracted position is larger than a distance between two wheels of the first set of at least four wheels along a direction of said rotation axis of the first set of at least four wheels. The distance between two wheels of the first set of wheels equals a distance between rails of the first track. A direction of said rotation axis of the first set of wheels is substantially transverse to the first direction of the storage lane. In the retracted position, a length of the at least one pair of extendable arms is therefore also larger than a width of the first track along the storage lane. As a result, said at least one pair of extendable arms can provide additional safety to the intervention shuttle and a human intervener in the shuttle, since the extendable arms, can provide tilt protection on the first track along the storage lane, preferably in retracted position, as well as on the second track along the transit lane, preferably in extended position. In this way, a relatively safe intervention shuttle can be provided.

The at least one pair of extendable arms can preferably be positioned above the second set of wheels, above meaning vertically above the second set of wheels, more preferably just above or at a short distance of the second set of wheels. In other words, the at least one pair of extendable arms is preferably positioned along the opposing sides where the second set of wheels are positioned as well. By placing a first extendable arm of the at least one pair of extendable arms above at least two wheels of the second set of wheels, and a second extendable arm above at least two further wheels of the second set of wheels at an opposite side, there is a maximal distance between the extendable arms of the at least one pair of extendable arms, which can enhance stability of the intervention shuttle. By placing said extendable arms at a short distance above said second set of wheels, said extendable arms will only just extend above an upper surface of the first track of the storage lane, when the intervention shuttle is placed on said first track. In this way, said extendable arms will engage said first track already at a slight sideward tilting movement of the intervention shuttle thus preventing the intervention shuttle from falling of the first track.

It is preferred that a length of an extendable arm of the at least one pair of extendable arms in the extended position at least equals twice a width of the intervention shuttle as seen in the first direction. When the intervention shuttle is positioned and/or driving on the second track in a transit lane, which is transverse to the first track, it is preferred to extend the at least one pair of extendable arms into the extended position, which are then extending along the second direction, which corresponds to a driving direction on the transit lane. When a length of said arm equals, or more preferably exceeds, twice the width of the intervention shuttle, or even exceeds three times a width of the shuttle, then the extended arms can engage vertical poles of the warehouse racks in between which the storage lanes extend when the intervention shuttle would tilt. Again, such a pair of extendable arms can enhance safety of the intervention shuttle and its passenger.

The at least one pair of extendable arms can include a lower pair of extendable arms and an upper pair of extendable arms. Two pairs of extendable arms can be mounted to the intervention shuttle at different heights, more preferably just on top of each other. In particular in the latter case, the lower pair of extendable arms and the upper pair of extendable arms may be extendable in opposite directions. In other words, each extendable arm is extendable on only one end, which can simplify manufacturing. By using two extendable arms one on top of the other and extendable in opposing directions, a same effect of protection can be reached while manufacturing of the extendable arms can be simplified. In particular, on each lateral side of the intervention when seen in the second direction, a lower extendable arm is extendable, for example in a driving direction of the intervention shuttle on the transit lane, and an upper extendable arm is extendable in a direction opposite the driving direction on the transit lane.

The intervention shuttle can preferably have a substantially rectangular shape including four corners. A length and a width of the substantially rectangular shape of the intervention shuttle may at least partially be determined by a width of the first track and of the second track. The wheels of each of the first set and the second set are preferably located adjacent said corners. More preferably, at least one wheel of each set of wheels is located adjacent to each corner, the wheels of the first set and the wheels of the second set being located on transverse sides of the intervention shuttle resulting in the same corner. In this way, a relatively stable intervention shuttle can be provided.

The second set of at least four wheels may advantageously be manually movable between an extended driving position and a retracted position. The manual change between a use of the first set of wheels and the second set of wheels is a safety measure for allowing human use of the intervention shuttle. The intervention shuttle can for example include a crank configured to allow adjusting a position of the second set of wheels, for example by rotating the crank. Alternatively, any other tool for moving the second set of wheels may be included. In the retracted position of the second set of wheels, a lowest point of the wheels of said second set of wheels is higher than a lowest point of the first set of wheels such that the intervention shuttle can be driven on the first set of wheels, in particular on the first track in the storage lane, while the second set of wheels is free of contact. In the extended driving position of the second set of wheels, the second set of wheels can be lowered to a position such that a lowest point of the wheels of the second set extends beyond, in particular is lower than, a lowest point of the first set of wheels. When the intervention shuttle is standing on the first set of wheels, the intervention shuttle will be lifted slightly when the second set of wheels is moved to the extended driving position such that the first set of wheels lose contact with a support surface, in particular with the first track in the storage lane while the second set of wheels can engage the second track in the transit lane.

The intervention shuttle can preferably include a brake configured to brake the first set of wheels and the second set of wheels simultaneously. In particular, the brake may for example brake two wheels of the first set and two wheels of the second set simultaneously. It is preferred that said brake is operable by a single braking handle, which can simplify operation of the intervention shuttle and thus prevent accidents due to inadvertent and/or wrong operation. Alternatively, the first set of wheels and the second set of wheels may be configured to be braked by respective first and second brakes.

It may be especially advantageous for the intervention shuttle to include a manual braking handle configured to release the at least one brake of the shuttle as well as a manual crank drive configured to allow driving said intervention shuttle along the first track or the second track. The intervention shuttle may then be configured to move along the first track or the second track by simultaneously operating the manual braking handle and the manual crank drive. Instead of operating the brake to brake the wheels, the manual braking handle is configured to release the at least one brake of the shuttle. In other words, the brake is configured such that the first set of wheels and the second set of wheels are always blocked by said brake. In this way, the intervention shuttle is always blocked and cannot move along one of the first track or the second track except when a human intervener operates the braking handle. The user of the intervention shuttle thus needs to perform two actions simultaneously to move the intervention shuttle: operate the manual braking handle to unlock the wheels and operate the manual crank drive to move the intervention shuttle along one of the first track or the second track. Such a combined operation can provide additional safety in the use of the intervention shuttle. Additionally, the manual braking handle may include a locking position in which the manual braking handle is locked such that the first set of wheels and the second set of wheels are free. Such a brake lock may be used when changing the intervention shuttle from a main lane into a storage lane or vice versa.

The intervention shuttle may preferably include a plurality of safety bars along sides of the shuttle, in particular along all four sides of the intervention shuttle. Such a safety bar can prevent a human intervener to fall out of the intervention shuttle. The safety bars may be positioned at various heights. Each side may for example include an upper safety bar and a lower safety bar positioned at a height which is intermediate between a base of the shuttle and the upper safety bar. A length of the at least one, preferably two, upper safety bars may extend beyond a contour of the intervention shuttle. Preferably, the two upper safety bars can extend substantially in parallel with a rotation axis of the first set of wheels, corresponding to the second direction, which is the driving direction on the transit lanes, up to a length which is at least longer than a distance between two wheels of the first set of wheels, or, in other words, longer than a width between two rails of a first track of a storage lane. In this way, the intervention shuttle cannot fall between two rails of the first track in the storage lane should the intervention shuttle tilt forward or backward in a storage lane.

A height of at least one of the plurality of safety bars may be adjustable. An adjustable safety bar may for example be movable upwardly and/or downwardly. In this way, a user can get into or out of the intervention shuttle relatively easily. More preferably, at least one of the lower safety bars may be adjustable in height and may for example be movable between its position and the upper safety bars or between its position and a base of the intervention shuttle. It may be preferred that all of the intermediate safety bars are adjustable in height. In this way, the intervention shuttle can allow a relatively easy use, in particular entrance and/or exit of a user, independently of the position the intervention shuttle is in.

According to safety requirements, a user must be safely secured with a harness when working at heights. Thereto, the intervention shuttle can include at least one a hook, for example an eye bolt, configured to receive a safety line shackle. More preferably, the intervention shuttle can include a plurality of hooks at different positions such that a user can safely attach a harness independently of a position of the user. Alternatively, the safety bar can be configured to receive an attachment of such a harness to keep more freedom of movement.

### Brief Description of the Drawings

Fig. 1 illustrates a perspective view of a part of an automated warehouse system including three automated warehouse shuttles;
Fig. 2 shows a perspective view on a preferred embodiment of an intervention shuttle on a track in a storage lane according to the invention;
Fig. 3a and 3b show a perspective view on the intervention shuttle of Figure 2 having the at least one pair of extendable arms in a retracted or extended position respectively;
Fig. 4 shows a perspective view on the intervention shuttle of Figure 2 on a track in a storage lane;
Fig. 5 shows a perspective view on the intervention shuttle of Figure 2 on a track in a main lane;
Fig. 6 shows a perspective view of the intervention shuttle of Figure 2 including an enlarged perspective view on a drive unit;
Fig. 7 shows a perspective view of the intervention shuttle of Figure 2 including an enlarged perspective view on the wheel handle; and
Fig. 8a and 8b show a front view of the intervention shuttle of Figure 2 having the second set of wheels in a retracted or an extended position respectively.

### Detailed Description of Embodiment(s)

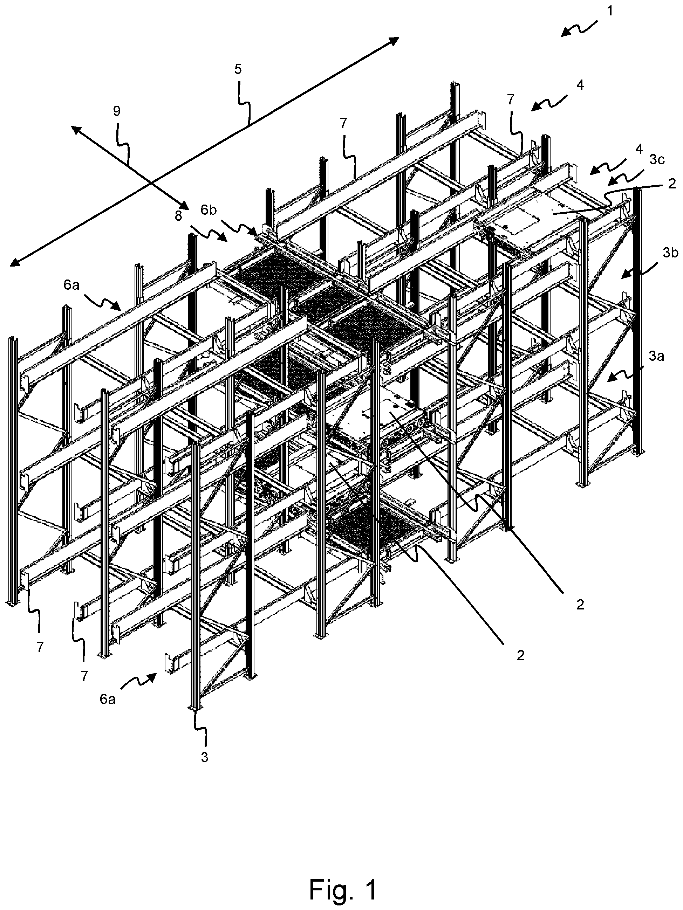

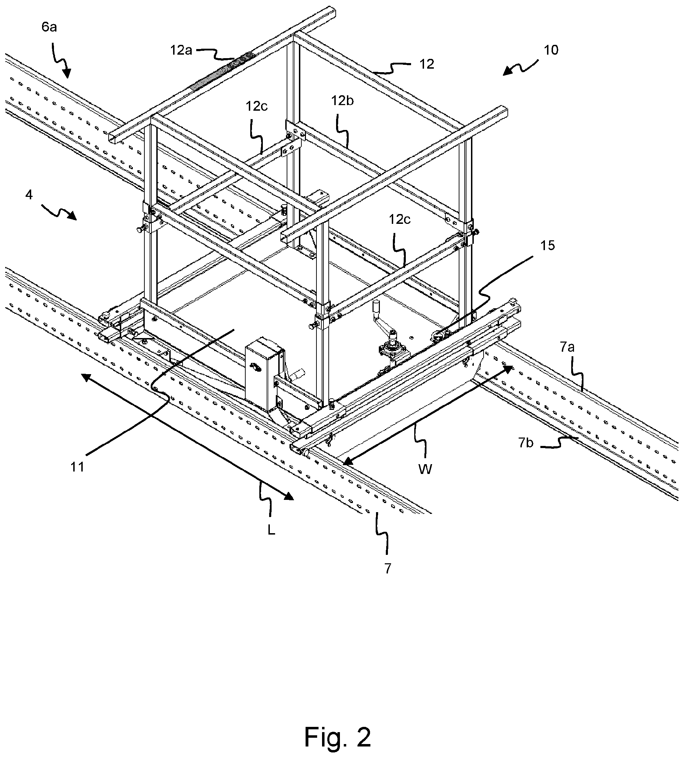

Figure 1 illustrates a perspective view of part of an automated warehouse system 1 including three automated warehouse shuttles 2. The warehouse system 1 generally includes a relatively large storage structure 3 configured to received goods for storage, for example palletized goods. The storage structure 3 can extend over a plurality of levels or storeys, of which for example three levels or storeys 3a, 3b, 3c are shown in Figure 1. The storage structure 3 generally extends along at least one storage lane 4 in a first direction 5, and preferably a plurality of storage lanes, which are substantially in parallel to each other. Transverse aisles, generally called transit lanes or main lanes 8, may connect said substantially parallel storage lanes 4, which transverse aisles may also be provided with tracks extending in a second direction 9 substantially transverse to the first direction 5. Storage lanes 4 usually do not include a solid floor, whereas transit lanes 8 may be provided with a solid floor, for example gratings, at predetermined levels or storeys. A first track 6a including at least one rail 7, preferably a pair of rails at a distance of each other, extend in said storage lane 4, preferably on every level 3a, 3b, 3c of each storage lane 4. Said rails 7 can preferably include two substantially horizontal surfaces: an upper surface 7a configured to support stored goods and a lower surface 7b (see Fig. 2) configured to receive wheels of an automated shuttle. Said rails may thereto have a specific shape, for example a stepped shape including a lower flange extending inwardly towards the other rail of a pair of rails, and an upper flange extending outwardly, so extending away from the other rail of a pair of rails. The upper flange may then be configured to receive goods for storage while the lower flange may guide the automated warehouse shuttles 2. Other shapes including an upper surface and a lower surface may be used as well. A second track 6b extends in a main lane or transit lane 8. Said second track 6b may have a similar shape as the first track 6a, or more preferably, may have a different shape, since no goods are stored in said main lane 8. A running face of said second track 6b in the transit lane 8 may preferably be mounted at a slightly lower level, for example at a level of around 0.5 mm tot more or less 3 mm lower, so that automated warehouse shuttles 2 are not hindered by said second track 6b when driving in a storage lane 4 and/or when changing into a transit lane 8.

Automated warehouse shuttles 2 may be configured to drive along tracks 6a and 6b of storage lanes 4 and of main lanes 8 respectively of a same level or storey without the shuttles being oriented differently. In other words, shuttles do not turn into another direction. Instead, the shuttles preferably include two sets of wheels, mounted substantially transversely with respect to each other, of which at least one set of wheels is configured to be lowered and/or risen automatically according to the lane in which they are driving. A running face of the second track 6b may for example be situated more or less 2.5 mm lower than a running surface of the first track 6a. At intersections between storage lanes 4 and main lanes 8, the system may include cross rails having a running face at a same level as of the first track 6a allowing an automated warehouse shuttle 2 to cross a main lane 8. However, for safety reasons, an intervention shuttle for human intervention in an otherwise fully, or least partly, automated warehouse is not allowed to be driven automatically. Providing an intervention shuttle for human intervention in an automated warehouse which is configured to be driven safely along tracks in two substantially transverse directions has proven to be a challenge.

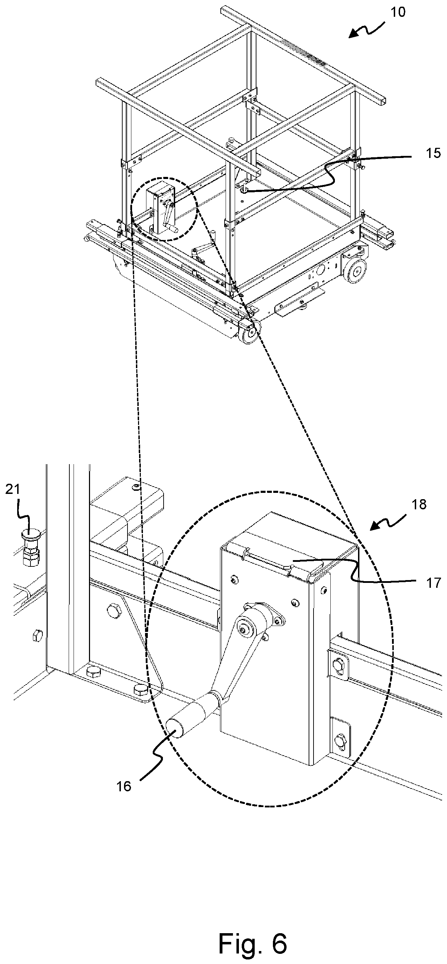

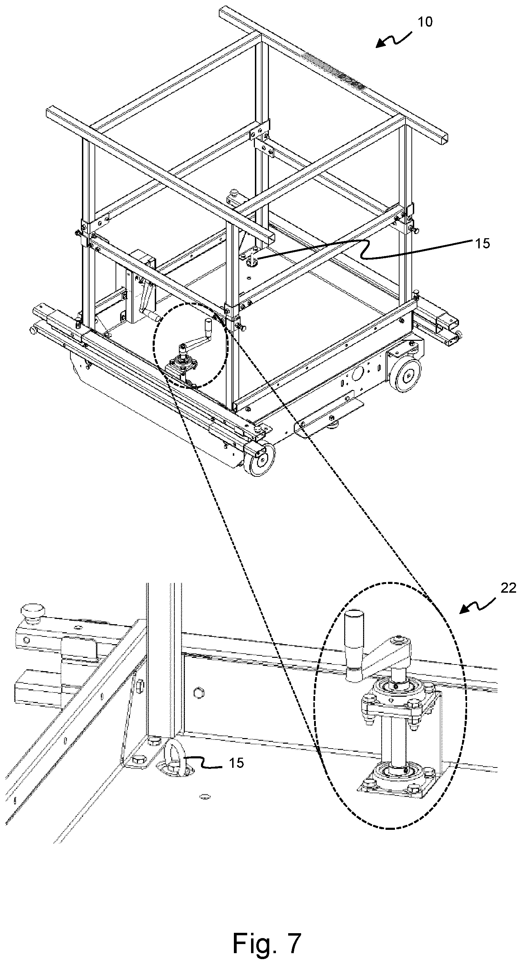

Figure 2 shows a perspective view on a preferred embodiment of an intervention shuttle 10 on a track 6a in a storage lane 4 according to the invention. The intervention shuttle 10, which may also be called an intervention carrier, is configured to bring or transport a human intervener to a location in the automated warehouse where an intervention by a human is needed. This can for example be caused by goods or an automated shuttle 2 which are broken or badly positioned, and/or which block a track. In other situations, a track may be broken such that automated shuttles 2 cannot pass anymore. The intervention shuttle 10 preferably has a substantially rectangular shape including four corners. A size of said intervention shuttle, in particular a length and a width of the shuttle, may depend on the width between rails of the first track and the second track of the automated warehouse. As an example, a length L, defined along the first direction 5, may be comprised in a range of 900 mm to 1500 mm, preferably 1000 mm to 1400 mm, for example substantially 1040 mm, or for example substantially 1370 mm. A width W, defined along the second direction 9 at a level of the second set of wheels, may be comprised in a range of 800 mm to 1100 mm, for example substantially 835 mm or for example substantially 1030 mm. The intervention shuttle also includes a platform 11 configured to receive and support the human intervener. The intervener can for example sit on hands and knees or squat, given the relatively low heights in automated warehouses. The shuttle can comprise a plurality of safety bars 12 along all sides of the shuttle. The safety bar 12 can enclose the platform 11 such that a human intervener can hold the safety bar in any direction, when sitting in the intervention shuttle. The plurality of safety bars 12 may for example include upper safety bars 12a and lower safety bars 12b, 12c. A height of one or more of said plurality of safety bars 12 may be adjustable, in particular a height of said lower safety bars 12b, 12c. In this way, a human intervener can move one of said lower safety bar 12b, 12c upward or downward to get onto or off the platform 11 of the intervention shuttle while moving it back in place afterwards. In particular, said lower safety bars 12b on opposing sides may be movable between an intermediate position and an upper position in height, while said lower safety bars 12c along adjacent sides to the safety bars 12b may be movable between an intermediate position and a lower position in height. The upper safety bars 12a may extend beyond the platform 11 in the second direction 9 such that a width measured along the upper safety bars 12a is longer than a width W measured at the level of the second wheels, for example around more or less 1300 mm, which is larger than a distance between the rails 7 of the first track 6a of the storage lane 4. The intervention shuttle can further include at least one hook, for example an eye bolt 15 (see also Figures 6 and 7), preferably two eye bolts or fall protection anchor points, configured to receive a safety line shackle such that the human intervener can secure himself or herself to the shuttle when sitting in the shuttle. A total height H of the intervention shuttle 10, measured from wheels to the upper safety bar 12a, is preferably higher than 1000 mm, more preferably higher than 1200 mm, for example between 1300 mm and 1350 mm, such as around 1320 mm. A weight of the shuttle is around 200 kg. The intervention shuttle is preferably configured to allow transportation of a single human intervener, optionally with one or more tools or toolbox, up to a total loading of for example 150 kg.

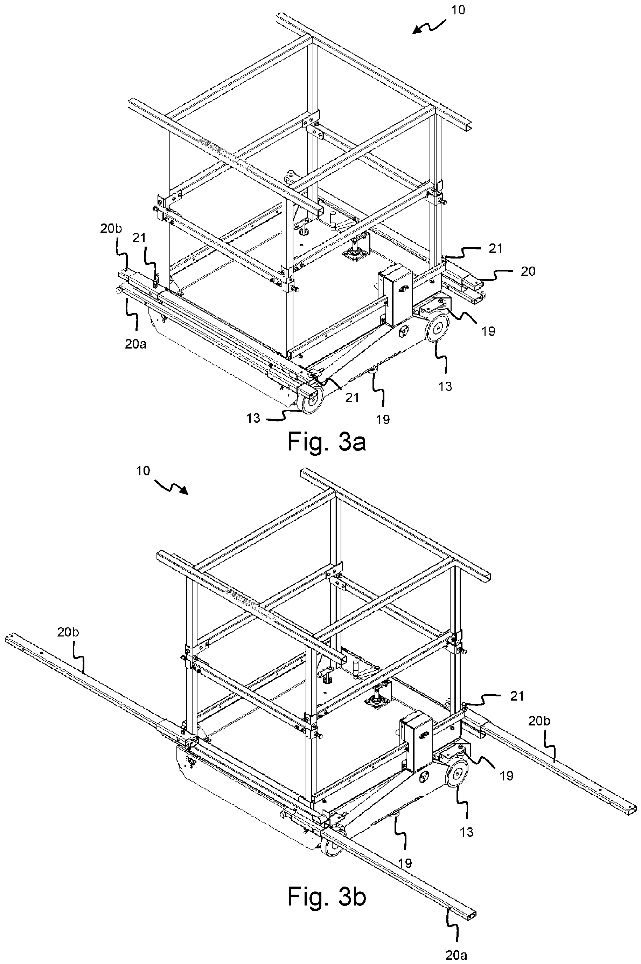

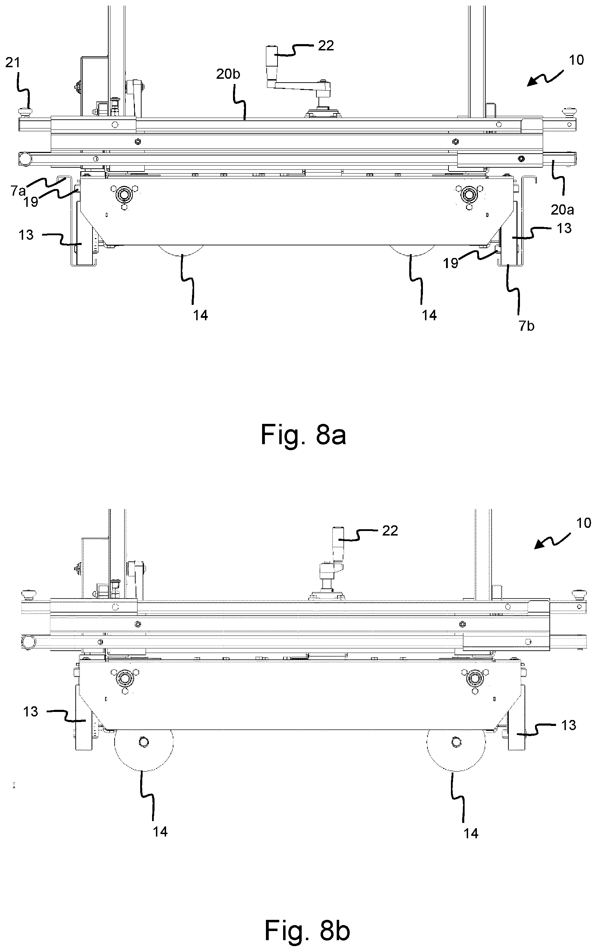

Figures 3a and 3b show a perspective view on the intervention shuttle 10 of Figure 2 having the at least one pair of extendable arms 20 in a retracted (Figure 3a) or extended (Figure 3b) position respectively. The intervention shuttle 10 includes a first set of at least four wheels 13 configured to drive on the first track 6a and a second set of at least four wheels 14 configured to drive on the second track 6b. The intervention shuttle 10 can preferably have a substantially rectangular shape including four corners. The wheels of each of the first set 13 and the second set 14 can the preferably be located adjacent said corners, as shown in Figures 8a and 8b. The intervention shuttle 10 may further include at least one pair of guiding wheels 19 configured to guide the intervention shuttle and engage rails of the first track 6a. Thereto, said at least one pair of guiding wheels 19 is positioned along the same side of the shuttle as the first set of wheels 13. In contrast to the first set of wheels 13, the at least one pair of guiding wheels preferably include a substantially vertical rotation axis, in particular a rotation axis which is substantially transverse to the platform 11 of the intervention shuttle 10. The intervention shuttle 10 can for example include two or three pairs of guiding wheels 19 positioned along opposing sides of the intervention shuttle when seen in the first direction, i.e. the driving direction along the storage lane 4. Two pairs of guiding wheels 19 may for example be positioned above wheels of the first set of wheels 13, while a third pair of guiding wheels 19 may be positioned in between wheels of the first set along a same side, and at least partly under the intervention shuttle 10. Said guiding wheels 19 may decrease a gap between a side of the intervention shuttle 10 and rails 7 of the first track 6a, as shown in Figure 8a.

In an inventive way, the intervention shuttle 10 includes at least one pair of extendable arms 20 positioned substantially in parallel with a rotation axis of the first set 13 of at least four wheels. More preferably, the at least one pair of extendable arms is positioned above the second set of wheels 14. In other words, the arms of one pair of extendable arms 20 are preferably positioned along opposing sides of the intervention shuttle 10 when seen in the second direction, so in the driving direction along the transit lane 8. Said the extendable arms of the at least one pair of extendable arms 20 are extendable longitudinally between a retracted position, as shown in Figure 3a, and an extended position, as shown in Figure 3b. The intervention shuttle 10 can for example include fixation elements 21, such as for example knobs or pins or any other suitable fixation element configured to fixate the extendable arms in either one of the retracted or the extended position. Instead of having a single pair of extendable arms, which are extendable on both ends of the arms, the intervention shuttle 10 as shown in Figures 3a and 3b can include two pairs of extendable arms, in particular a lower pair of extendable arms 20a and an upper pair of extendable arms 20b. The lower pair of extendable arms 20a and the upper pair of extendable arms 20b may be extendable in opposite directions. As a result, by having one arm of each of the lower pair 20a and the upper pair 20b on a same side of the intervention shuttle 10, the extendable arms can be extended to both sides of the intervention shuttle 10, although each arm is only extendable on one end of the arm.

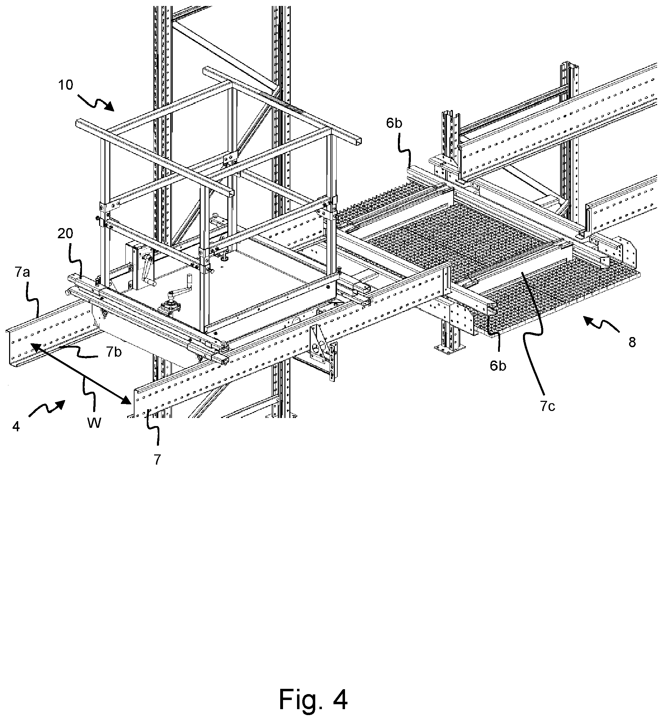

Figure 4 shows a perspective view on the intervention shuttle of Figure 2 on a track 6a in a storage lane 4 near a crossing with a transit lane or main lane 8. The rails of the first track 6a can include a connecting portion 7c positioned on a crossing transversely in between two rails of the second track 6b allowing the intervention shuttle 10 to cross a transit lane 8. Thereto, there may be a slight difference in height between the first track 6a and the second track 6b, for example in a range of 0.5 mm to 3 mm. Changing between the first and the second sets of wheels 13, 14 will be explained with respect to Figures 7, 8a and 8b. In the storage lane 4, the intervention shuttle 10 is configured to drive using its first set of wheels 13, which engage a lower surface 7b of the rails 7. The at least one pair of extendable arms 20 is in the retracted position while driving on the storage lane 4 since the arms extend transversely to the first direction 5. In an inventive way, a length of the at least one pair of extendable arms 20 in the retracted position is larger than a distance between two wheels of the first set 13 of at least four wheels along a direction of said rotation axis of the first set of at least four wheels. As a result, a length of the at least one pair of extendable arms 20 in the retracted position is also larger than a width W or distance between the two rails 7 of the first track 6a. In this way, the at least one pair of extendable arms 20 can provide a tilt protection to the intervention shuttle 10 while driving in the storage lanes 4, which generally do not include any floor. The at least one pair of extendable arms 20 is preferably positioned at a height such that said arms are only spaced apart above the rails 7 of the first track 6a at a very short distance of the upper storage surface 7a of said rails 7.

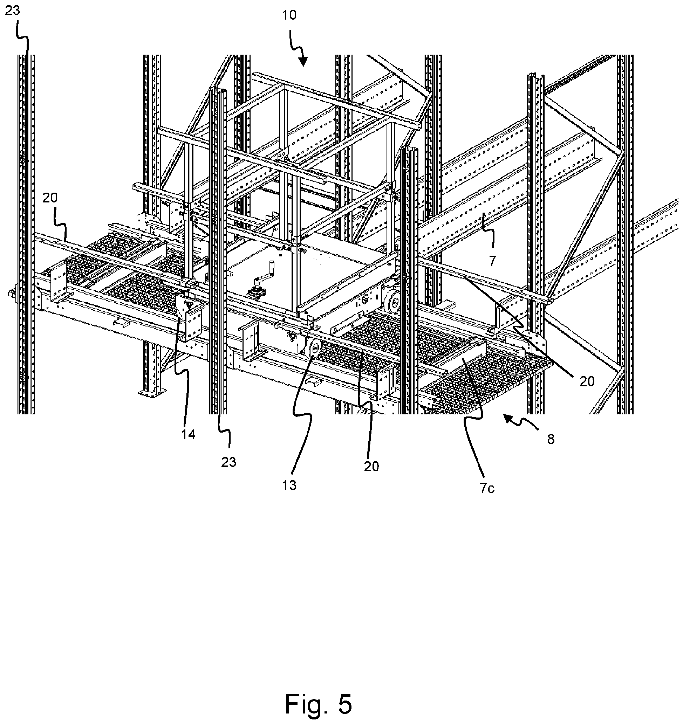

Figure 5 shows a perspective view on the intervention shuttle of Figure 2 on a track 6b in a main lane 8. The intervention shuttle 10 can then drive using the second set of wheels 14 engaging the second track 6b which set is then in an extended driving position such that a lowest point of the second set of wheels 14 is lower than a lowest point of the first set of wheels. As a result, the first set of wheels 13 do not make any contact anymore with one of the tracks 6a or 6b. In the second direction 9, which is the driving direction in the transit lane 8, a length of an extendable arm of the at least one pair of extendable arms in the extended position at least equals twice a width W of the intervention shuttle as seen in the first direction 5. In other words, each of the arms of the at least one pair of extendable arms 20 can be extended to at least double its length in the retracted position. The width of the intervention shuttle 20 is shown in Figures 2 and 4 and is a width as seen in the first direction 5, so substantially in parallel with a rotation axis of the first set of wheels 13. By extending the extendable arms 20 when the intervention shuttle 20 is on a main lane 8, the extended arms will engage at least two substantially vertical support poles 23 or posts of the storage structure 3 simultaneously when the intervention shuttle risked to tilt such that a tilt over of the intervention shuttle 10 can be prevented. In other words, the at least one pair of extendable arms 20 in their extended position results in a total length of the intervention shuttle 10 being for example three times a width W of the intervention shuttle, which is larger than a largest distance between adjacent vertical support poles 23 of the storage structure 3 such that the intervention shuttle 10 cannot fall down from a transit lane 8 in between two adjacent support poles.

Figure 6 shows a perspective view of the intervention shuttle of Figure 2 including an enlarged perspective view on a drive unit 18. The intervention shuttle 10 is configured to be driven manually along a first track 6a extending along the storage lane 4 and along a second track 6b extending along the transit lane 8. Thereto, the intervention shuttle 10 can include a manual crank drive configured to allow driving said intervention shuttle along the first and/or second track. Said manual crank drive may for example include a handle 16 configured to be rotated manually to drive the intervention shuttle 10. The intervention shuttle can further comprise a manual braking handle 17 configured to release the at least one brake of the shuttle. For safety reasons, it is preferred that all the wheels of the first set of wheels 13 and of the second set of wheels 14, or at least two wheels of the first set of wheels 13 and two wheels of the second set of wheels 14, are always blocked by a brake simultaneously, except when the manual braking handle 17 is operated. Operating the manual braking handle 17 thus has the opposite effect of a normal brake: operating the manual braking handle 17 releases the wheels instead of blocking said wheels. To move the intervention shuttle 10, the user thus needs to simultaneously operate the manual braking handle 17, for example push down the manual brake handle 17, and operate the manual crank drive handle 16, for example rotate said manual crank drive handle 16. Since the manual crank drive handle 16 and the manual braking handle 17 need to be operated simultaneously for driving, they are preferably mounted close to each other, for example on a same side of the intervention shuttle 10, in particular on a same drive unit 18 as shown in Figure 6.

Figure 7 shows a perspective view of the intervention shuttle of Figure 2 including an enlarged perspective view on the wheel handle 22. Since an automatic rise or lowering of a first or second set of wheels to change from a first track 6a to a second track 6b or vice versa is not suitable for an intervention shuttle 10 for human intervention for safety reasons, the second set of at least four wheels 14 may preferably be manually movable between a retracted position and an extended driving position, as shown in Figures 8a and 8b. Thereto, the intervention shuttle 10 can for example include a manual wheel handle 22 configured to move the second set of wheels 14 from the retracted position to the extended driving position or vice versa. The wheel handle 22 may for example be a rotatable crank.

Figures 8a and 8b show a front view of the intervention shuttle of Figure 2 having the second set of wheels in a retracted (Figure 8a) or an extended (Figure 8b) position respectively. The intervention shuttle 10 includes a first set of at least four wheels 13 configured to engage a lower surface 7b of the first track 6a. The intervention shuttle 10 further includes a second set of at least four wheels 14 configured to engage the second track 6b (not shown). The first set of at least four wheels 13 are mounted to the intervention shuttle 10 at a fixed height while a height of the second set of wheels 14 may be adjustable such that the second set of wheels may be in a retracted position, for example while using the first set of wheels on the first track 6a, or in an extended position. In the extended position, a running face of the second set of wheels 14 extends lower than a running face of the first set of wheels 13 such that the intervention shuttle 10 may be configured to drive on the second set of wheels along the second track 6b in a main lane 8. A diameter of the wheels 13 of the first set may be different from a diameter of the wheels 14 of the second set, but this diameter does not compensate for the difference in height of mounting of the wheels to the intervention shuttle such that a respective running face of the at least four wheels 13 of the first set of wheels is at a different height than a respective running face of the at least four wheels 14 of the second set of wheels. At least one wheel of each of the first set and the second set of at least four wheels 13, 14 is preferably mounted near each corner of the intervention shuttle 10 to enhance stability of the intervention shuttle 10. It is preferable to have one wheel of each set of wheels positioned near a corner of the intervention shuttle 10.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An intervention shuttle for human intervention in an automated warehouse, the warehouse including at least one storage lane along a first direction and at least one transit lane along a second direction transverse to the first direction, wherein the intervention shuttle is configured to be driven manually on a first track extending along the at least one storage lane and on a second track extending along the at least one transit lane, wherein the intervention shuttle includes a first set of at least four wheels configured to drive on the first track and a second set of at least four wheels configured to drive on the second track, wherein the intervention shuttle includes at least one pair of extendable arms positioned substantially in parallel with a rotation axis of the first set of at least four wheels, wherein said at least one pair of extendable arms are extendable longitudinally between a retracted position and an extended position, wherein a length of the at least one pair of extendable arms in the retracted position is larger than a distance between two wheels of the first set of at least four wheels along a direction of said rotation axis of the first set of at least four wheels.

2. The intervention shuttle according to claim 1, wherein the at least one pair of extendable arms is positioned above the second set of wheels.

3. The intervention shuttle according to any of the preceding claims, wherein a length of an extendable arm of the at least one pair of extendable arms in the extended position at least equals twice a width of the intervention shuttle as seen in the first direction.

4. The intervention shuttle according to any of the preceding claims, wherein the at least one pair of extendable arms includes a lower pair of extendable arms and an upper pair of extendable arms.

5. The intervention shuttle according to claim 4, wherein the lower pair of extendable arms and the upper pair of extendable arms are extendable in opposite directions.

6. The intervention shuttle according to any of the preceding claims, wherein the intervention shuttle has a substantially rectangular shape including four corners, wherein the wheels of each of the first set and the second set are located adjacent said corners.

7. The intervention shuttle according to any of the preceding claims, wherein the second set of at least four wheels is manually movable between an extended driving position and a retracted position.

8. The intervention shuttle according to any of the preceding claims, wherein the intervention shuttle includes at least one brake configured to brake the first set of wheels and the second set of wheels simultaneously.

9. The intervention shuttle according to claim 8, wherein the intervention shuttle includes:
a. a manual braking handle configured to release the at least one brake of the shuttle;
b. a manual crank drive configured to allow driving said intervention shuttle along the first and/or second track; wherein the intervention shuttle is configured to move along the first and/or second track by simultaneously operating the manual braking handle and the manual crank drive.

10. The intervention shuttle according to any of the preceding claims, the shuttle comprising a plurality of safety bars along sides of the shuttle.

11. The intervention shuttle according to claim 10, wherein a height of at least one of the plurality of safety bars is adjustable.
